# EUROPEAN PATENT APPLICATION

(11) **EP 4 819 464 A1**
(43) Date of publication of application: **07.10.2026**
(21) Application number: 25167822.3
(22) Date of filing: 01.04.2025
(51) Int. Cl.: H02M 1/00, H02M 5/297, H02M 7/06, H02M 5/12, H02M 5/14, H02J 1/00

(54) **POWER SUPPLY SYSTEM FOR A PLURALITY OF DC LOADS BY MEANS OF PROVIDING A HIGH FREQUENCY AC RAIL FEEDING INDIVIDUAL BRANCH TRANSFORMERS AND MAGNETIC AMPLIFIER CONTROLLED RECTIFIERS**

(71) Applicant: GE Energy Power Conversion Technology Limited, Rugby, Warwickshire CV21 1BD (GB)
(72) Inventor: PERMUY, Alfred, 91140 Villebon sur Yvette (FR)
(74) Representative: Casalonga

(57) **Abstract**

Power supply system comprising main input terminals configured to be connected to a grid, an AC/AC power converter comprising input terminals connected to the main input terminals and output terminals, and a plurality of power branches. Each power branch comprising input terminals connected to the output terminals of the AC/AC power converter, at least one set of output terminals configured to be connected to a DC load of the plurality of DC loads, a branch transformer connected to the input terminals of the said power branch; and a controlled rectifier connected to the branch transformer, the controlled rectifier comprising output terminals connected to the output terminals of the said power branch to power the output terminals of the said power branch with a DC current.

## Description

### FIELD OF THE INVENTION

The present invention relates to a power supply system for a plurality of DC loads, a facility comprising such a power supply system and a method for powering the plurality of DC loads.

### BACKGROUND

A plant may comprise a plurality of DC loads, such as plasma torches, and some of these DC loads may require a high amount of power.

Power requirements of such DC loads may vary significantly.

It is known to power in such a way that each DC load is supplied with power delivered by a dedicated power converter.

The number of power converters is equal to the number of DC loads, which increases the cost of a plant that comprises DC loads and the complexity of such a plant.

Further, filtering devices are required to reduce rejection on a grid powering the power converters.

It is therefore proposed to overcome some or all of these disadvantages.

### SUMMARY OF THE INVENTION

In view of the foregoing, the invention proposes a power supply system comprising:
- main input terminals configured to be connected to a grid;
- an AC/AC power converter comprising input terminals connected to the main input terminals and output terminals; and
- a plurality of power branches, each power branch comprising:
   - input terminals connected to the output terminals of the AC/AC power converter;
   - at least one set of output terminals configured to be connected to a DC load of the plurality of DC loads;
   - a branch transformer connected to the input terminals of the said power branch; and
   - a controlled rectifier connected to the branch transformer, the controlled rectifier comprising output terminals connected to the output terminals of the said power branch to power the output terminals of the said power branch with a DC current.

Advantageously, the number of power branches is equal to the number of DC loads, the set of output terminals of each power branch being intended to be connected to a DC load.

Preferably, the AC/AC power converter is configured to increase the frequency of a current delivered by the grid so that the frequency of the current delivered by the AC/AC power converter is higher than the frequency delivered by the grid.

Advantageously, the power supply system further comprises a main transformer comprising a primary circuit connected to the AC main input terminals and a secondary circuit connected to the input terminals of the AC/AC power converter.

Preferably, each power branch further comprises a switch between the input terminals of the said power branch and the branch transformer.

Advantageously, the branch transformer comprises a primary winding and two secondary windings, the primary winding being connected to the input terminals of the said power branch and the two secondary windings being connected to the controlled rectifier, a first end of the two secondary windings being connected together to form a common connection configured to be connected to the DC load and the controlled rectifier comprises a full wave magnetic amplifier comprising a first leg connected to a second end of a first secondary winding of the two secondary windings and a second leg connected to a second end of a second secondary winding of the two secondary windings.

Preferably, the full wave magnetic amplifier further comprises a control device and each leg comprises an inductor wound onto a magnetic core, a first diode and a second diode. A first end of the inductor of each leg is connected to first and second input terminals of the controlled rectifier. A second end of the inductor of each leg is connected to the anode of the first diode and to the cathode of the second diode of the said leg, the anode of the second diodes being connected to the control device. The controlled rectifier further comprises a diode, a current sensor and an inductor. The anode of the diode and a first end of the inductor are connected to the cathode of the first diode of each leg. A second end of the inductor is connected to the output terminals of the controlled rectifier, the current sensor being intended to deliver the value of a current flowing into the set of output terminals to the control device to control the magnetic saturation of the magnetic core so that the value measured by the current sensor is equal to a predetermined current value.

Alternatively, the branch transformer comprises a primary winding and a secondary winding, the primary winding being connected to the input terminals of the said power branch and the secondary winding being connected to the controlled rectifier. The controlled rectifier comprises a full wave magnetic amplifier comprising a first leg and a second leg. Each leg comprises a first inductor wound onto a magnetic core, the first inductor comprising a first end connected to a first end of the secondary winding and a second end connected to a first connection point. Each leg further comprises a diode, wherein the anode of the diode of the first leg is connected to a first connection point of the first leg and the cathode of the diode of the first leg is connected to a second connection point of the first leg. In addition, the cathode of the diode of the second leg is connected to a first connection point of the second leg and the anode of the diode of the second leg is connected to a second connection point of the second leg.

Each leg further comprises a second inductor comprising a first end connected to the second connection point and a second end connected to a third connection point.

The full wave magnetic amplifier further comprises a first power branch connected to both the first connection point of the first leg and the first connection point of the second leg. The first power branch comprises a first diode comprising an anode connected to the first connection point of the second leg, and a cathode connected to a control device configured to control the magnetic saturation of the magnetic core.

The first power branch further comprises a second diode comprising an anode connected to the control and a cathode connected to the first connection point of the first leg. The full wave magnetic amplifier further comprises a second power branch connected to both the second connection point of the first leg and the second connection point of the second leg.

The second power branch comprises a first diode comprising an anode connected to the second connection point of the second leg and a cathode connected to a middle connection point of the second power branch, the middle connection point of the second power branch being connected to a second end of the secondary winding of the branch transformer.

The second power branch further comprises a second diode comprising an anode connected to the middle connection point and a cathode connected to the second connection point of the first leg.

The full wave magnetic amplifier further comprises a third power branch connected to both the third connection point of the first leg and the third connection point of the second leg.

The third power branch comprises a first capacitor comprising a first end connected to the third connection point of the second leg and a second end connected to a middle connection point of the third power branch, the middle connection point of the third power branch being connected to the second end of the being connected to the secondary winding of the branch transformer. The third power branch further comprises a second capacitor having a first end connected to the middle connection point and a second end connected to the third connection point of the first leg.

The controlled rectifier further comprises a current sensor intended to deliver the value of a current flowing into the set of output terminals to the control device to control the magnetic saturation of the magnetic core so that the value measured by the current sensor is equal to a predetermined current value.

Advantageously, the branch transformer comprises a primary winding and at least one secondary winding, the primary winding being connected to the input terminals of the said power branch and the at least one secondary winding being connected to the controlled rectifier, the controlled rectifier comprising at least two phase legs, each phase leg being connected to an end of the at least one secondary winding, each phase leg comprising at least two thyristors in series.

Advantageously, the branch transformer comprises a primary winding and at least one secondary winding, the primary winding being connected to the input terminals of the said power branch and the at least one secondary winding being connected to the controlled rectifier, the controlled rectifier comprises a modular multilevel converter configured to deliver a DC current.

Preferably, each DC load is any one of a plasma torch, an electrolyser, an electric arc furnace, an electric transportation or a fractionation tower.

Advantageously, all the power branches are identical.

Another object of the present invention relates to a facility comprising a plurality of DC loads and the power supply system according to any one of the previously defined embodiments, each DC load being connected to a set of output terminals of a power branch.

Another object of the present invention relates to a method for powering a plurality of DC loads.

The method comprises:
- controlling an AC/AC power converter comprising input terminals connected to main input terminals coupled to a grid, and output terminals so that the amplitude of at least one power voltage delivered in the output terminals by the AC/AC power converter from power supplied by the grid is equal to a predetermined value
- powering input terminals of a plurality of power branches connected in parallel to the output terminals of the AC/AC power converter with the power voltage,
- each power branch comprising at least one set of output terminals connected to the DC load, a branch transformer connected to the input terminals of the said power branch and a controlled rectifier connected to the branch transformer, the controlled rectifier comprising output terminals connected to the output terminals of the said power branch, the method comprising controlling the controlled rectifier to power the set of output terminals of the said power branch with a DC current to power the said DC load.

### BRIEF DESCRIPTION OF THE DRAWINGS

Other characteristics and advantages of the invention will emerge on reading the following description of embodiments of the invention, provided solely by way of non-limiting examples and with reference to the drawings, in which:
- FIG. 1 illustrates an embodiment of a facility according to the invention;
- FIG. 2 illustrates a first embodiment of a controlled rectifier according to the invention;
- FIG. 3 illustrates a second embodiment of a controlled rectifier according to the invention;
- FIG. 4 illustrates a third embodiment of a controlled rectifier according to the invention; and
- FIG. 5 illustrates an embodiment of a power branch according to the invention.

### DETAILED DESCRIPTION OF THE INVENTION

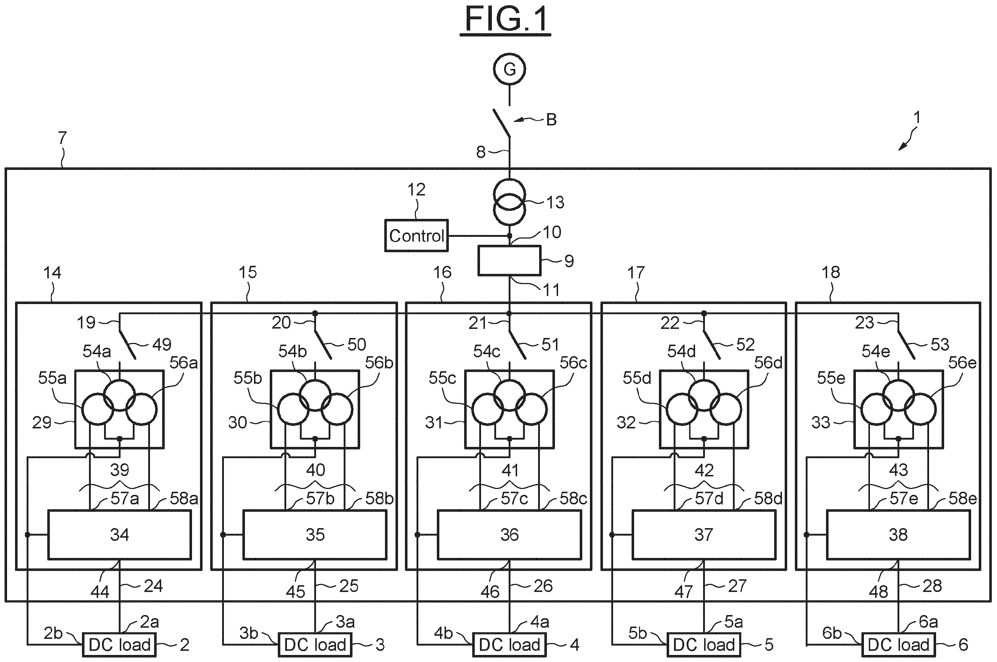

Figure 1 illustrates an example of a facility 1 comprising a plurality of DC loads 2, 3, 4, 5, 6 and a power supply system 7.

The facility 1 comprises N DC loads, N being an integer greater than zero.

For the sake of clarity, it is assumed that N is here equal to five, and that the facility 1 comprises five DC loads 2, 3, 4, 5, 6.

The power supply system 7 comprises main input terminals 8 connected to a grid G through a breaker B. The power supply system 7 is only connected to the grid G in one point by the breaker B. This ensures that the whole power supply system 7 may be disconnected all at once from the grid G quickly and easily thanks to the breaker B. Moreover, this reduces complexity of the whole facility 1 as there is only one connection point between the main input terminals 8 and the power supply system 7.

The grid G may be a three-phase grid delivering a three-phase current *I_{G}.*

In variant, the grid may be a M-phase grid delivering a M-phase current *I_{G},* M being an integer greater than zero.

The grid G may be supplied for example by a solar farm comprising at least one solar panel, a wind farm comprising at least one wind turbine and/or any renewable power plant.

Each DC load 2, 3, 4, 5, 6 comprises first terminals 2a, 3a, 4a, 5a, 6a connected to the power supply system 7 and second terminals 2b, 3b, 4b, 5b, 6b.

A DC load is any electrical component or device that requires direct current (DC) power.

The power supply system 7 comprises an alternating current AC/ alternating current AC power converter 9 comprising input terminals 10 and output terminals 11, and a control circuit 12.

The output terminals 11 of the AC/AC power converter 9 are X-phase output terminals, X being an integer greater than zero, so that the output terminals 11 deliver a X-phase power current *I_{S}.*

It is assumed that X is equal to three so that the AC/AC power converter 9 delivers a three-phase power current *I_{S}* at its output terminals 11.

In another variant, X is preferably equal to one so the output terminals 11 deliver a single-phase power current. The power supply system 7 further comprises a main transformer 13 comprising a primary circuit connected to the AC main input terminals 8 and a secondary circuit connected to the input terminals 10 of the AC/AC power converter 9.

The main transformer 13 permits to adapt the voltage supplied by the grid G to the power converter 9 for example to optimize the design of the power converter 9, for example to reduce the cost of the power converter 9, and to filter perturbations on the grid G, for example overvoltage. Therefore, the main transformer 13 allows to get rid of a filter.

In another embodiment, the power supply system 7 does not comprise the main transformer 13, the input terminals 10 of the AC/AC power converter 9 being directly connected to the AC main input terminals 8.

The power supply system 7 further comprises N power branches 14, 15, 16, 17, 18 so that the number of power branches may be equal to the number of DC loads 2, 3, 4, 5, 6.

Each power branch 14, 15, 16, 17, 18 comprises input terminals 19, 20, 21, 22, 23 and a set of output terminals 24, 25, 26, 27, 28.

The input terminals 19, 20, 21, 22, 23 of the power branches 14, 15, 16, 17, 18 are connected to the output terminals 11 of the AC/AC power converter 9.

The set of output terminals 24 of a first power branch 14 are connected to first terminals 2a of a first DC load 2, the set of output terminals 25 of a second power branch 15 are connected to first terminals 3a of a second DC load 3, the set of output terminals 26 of the third power branch 16 are connected to first terminals 4a of the third DC load 4, the set of output terminals 27 of the fourth power branch 17 are connected to first terminals 5a of the fourth DC load 5 and the set of output terminals 28 of the fifth power branch 18 are connected to first terminals 6a of the fifth DC load 6.

Each power branch 14, 15, 16, 17, 18 comprises a branch transformer 29, 30, 31, 32, 33.

The branch transformers 29, 30, 31, 32, 33 may have a same transformation ratio or at least one branch transformer may have a different transformation ratio than the transformation ratio of another branch transformers. Each power branch 14, 15, 16, 17, 18 further comprises a controlled rectifier 34, 35, 36, 37, 38 comprising input terminals 39 (57a, 58a), 40 (57b, 58b), 41 (57c, 58c), 42 (57d, 58d), 43 (57e, 58e) and connected to the branch transformer 29, 30, 31, 32, 33 of the said power branch 14, 15, 16, 17, 18 and output terminals connected to the set of output terminals 24, 25, 26, 27, 28 of the said power branch 14, 15, 16, 17, 18.

The output terminals 24, 25, 26, 27, 28 are configured to power the first terminals 2a, 3a, 4a, 5a, 6a of the DC loads 2, 3, 4, 5, 6 from a current delivered by the branch transformer 29, 30, 31, 32, 33 connected to the said controlled rectifier 34, 35, 36, 37, 38. Each power branch 14, 15, 16, 17, 18 may power more than one DC load 2, 3, 4, 5, 6, the said power branch 14, 15, 16, 17, 18 may power K DC loads, where K is an integer.

The branch transformers 29, 30, 31, 32, 33 provide a galvanic isolation between the controlled rectifiers 34, 35, 36, 37, 38 and the AC/AC power converter 9 so that the power supply system 7 implements only one AC/AC power converter 9 to power the plurality of DC loads 2, 3, 4, 5, 6 contrary to a plant known form the prior wherein each DC load is supplied by a dedicated power converter.

Each power branch 14, 15, 16, 17, 18 may further comprise a switch 49, 50, 51, 52, 53 connecting the input terminals 19, 20, 21, 22, 23 of the said power branch 14, 15, 16, 17, 18 and the branch transformer 29, 30, 31, 32, 33 of the said power branch 14, 15, 16, 17, 18.

In another variant, the power branches 14, 15, 16, 17, 18 do not comprise the switch 49, 50, 51, 52, 53, the input terminals 19, 20, 21, 22, 23 of the power branch 14, 15, 16, 17, 18 being connected to the branch transformer 29, 30, 31, 32, 33 of the said power branch 14, 15, 16, 17, 18.

The branch transformer 29, 30, 31, 32, 33 may comprise a primary winding 54a, 54b, 54c, 54d, 54e and two secondary windings 55a, 56a, 55b, 56b, 55c, 56c, 55d, 56d, 55e, 56e. The primary winding 54a, 54b, 54c, 54d, 54e is connected to the input terminals 19, 20, 21, 22, 23 of the said power branch 14, 15, 16, 17, 18 and the two secondary windings 55a, 56a, 55b, 56b, 55c, 56c, 55d, 56d, 55e, 56e are connected to the controlled rectifier 34, 35, 36, 37, 38.

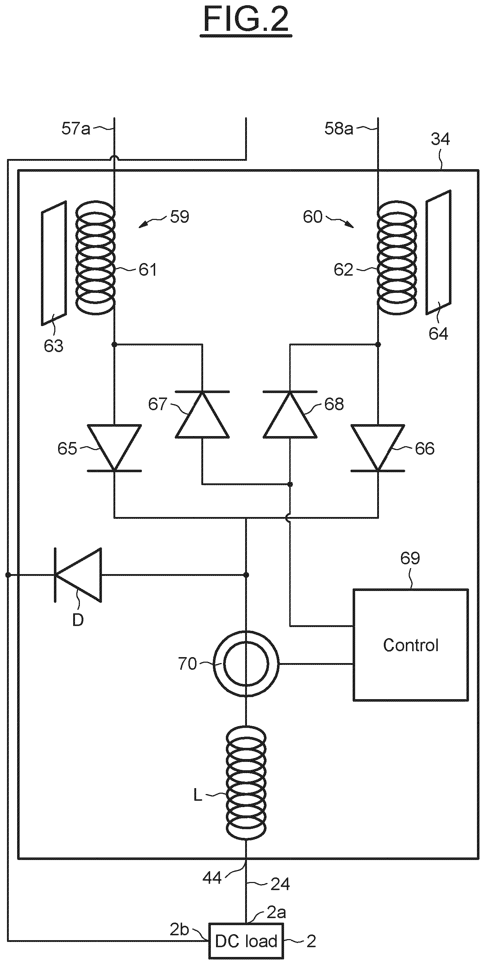

Figure 2 illustrates schematically a first embodiment of the controlled rectifier 34, 35, 36, 37, 38.

The controlled rectifier 34 is connected to the two secondary windings 55a, 56a. The first ends of the two secondary windings 55a, 56a are connected together to form a common connection connected to the second terminal 2b of the DC load 2.

The controlled rectifier 34 comprises a full wave magnetic amplifier comprising a first leg 59 connected to a first end of a first secondary winding 55a of the two secondary windings 55a, 56a and a second leg 60 connected to a second end of a second secondary winding 56a of the two secondary windings 55a, 56a and a control device 69.

Each leg 59, 60 comprises an inductor 61, 62 wound onto a magnetic core 63, 64, a first diode 65, 66 and a second diode 67, 68.

A first end of the inductor 61 of the first leg 59 is connected to a first input terminal 57a of the controlled rectifier 34, a second end of the inductor 61 of the first leg 59 is connected to the anode of the first diode 65 and to the cathode of the second diode 67, the cathode of the first diode 65 is connected to the set of output terminals 24 and the anode of the second diode 67 is connected to the control device 69.

A first end of the inductor 62 of the second leg 60 is connected to a second input terminal 58a of the controlled rectifier 34, a second end of the inductor 62 of the second leg 60 is connected to the anode of the first diode 66 and to the cathode of the second diode 68, the cathode of the first diode 66 is connected to the set of output terminals 24 and the anode of the second diode 68 is connected to the control device 69.

The controlled rectifier 34 further comprises a diode D, a current sensor 70 and an inductor L.

The anode of the diode D and a first end of the inductor L is connected to the cathode of the first diodes 65, 66 of the first and second legs 59, 60.

A second end of the inductor L is connected to the output terminals 44, 45, 46, 47, 48 of the controlled rectifier 34.

The current sensor 70 is intended to deliver the value of a current flowing into the set of output terminals 24 to the control device 69.

The control device 69 controls the magnetic saturation of the magnetic core 63, 64 so that the value measured by the current sensor 70 is equal to a predetermined current value.

When the current received in the input terminals 57a, 58a is positive, the first leg 59 delivers a regulated current to the DC load 2 and when the current received in the input terminals 57a, 58a is negative, the second leg 60 delivers a regulated current to the DC load 2.

The DC load 2 is supplied independently of the sign of the current delivered in the input terminals 57a, 58a.

The document entitled *"*Magnetic Amplifier Control for Simple, Low-Cost, Secondary Regulation, by Bob Mammano" describes the implementation of a magnetic amplifier.

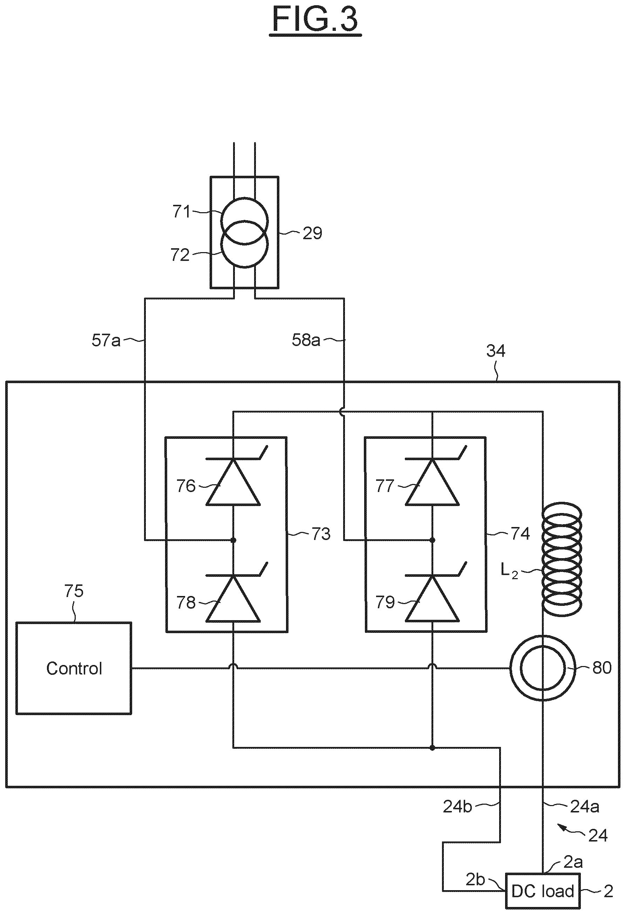

Figure 3 illustrates schematically a second embodiment of the controlled rectifier 34, 35, 36, 37, 38.

The branch transformer 29 comprises a primary winding 71 connected to the switch 49 and a secondary winding 72 connected to the input terminals 57a, 58a of the controlled rectifier 34.

The controlled rectifier 34 comprises a first phase leg 73, a second phase leg 74 and a control device 75.

Each phase leg 73, 74 comprises a first thyristor 76, 77 and a second thyristor 78, 79 in series so that the anode of the first thyristor 76, 77 is connected to the cathode of the second thyristor 78, 79.

The anode of the second thyristor 78, 79 of the phase legs 73, 74 is connected to a second terminal 24b of the set of output terminals 24.

The first terminal 24a of the set of output terminals 24 is connected to the first terminal 2a of the DC load 2 and the second terminal 24b of the set of output terminals 24 is connected to the second terminal 2b of the DC load 2.

A connexion between the first thyristor 76 and the second thyristor 78 of the first phase leg 73 is connected to the first input terminal 57a of the controlled rectifier 34.

A connexion between the first thyristor 77 and the second thyristor 79 of the second phase leg 74 is connected to the second input terminal 58a of the controlled rectifier 34.

The controlled rectifier 34 further comprises an inductor *L*₂ and a current sensor 80 delivering the value of a current flowing into the set of output terminals 24 to the control device 75.

A first end of the inductor *L*₂ is connected to the cathode of the first thyristors 76, 77 and a second end of the inductor *L*₂ is connected to a first terminal 24a of the set of output terminals 24.

The control device 75 controls the thyristors 76, 77, 78, 79 so that the value measured by the current sensor 80 is equal to a predetermined current value.

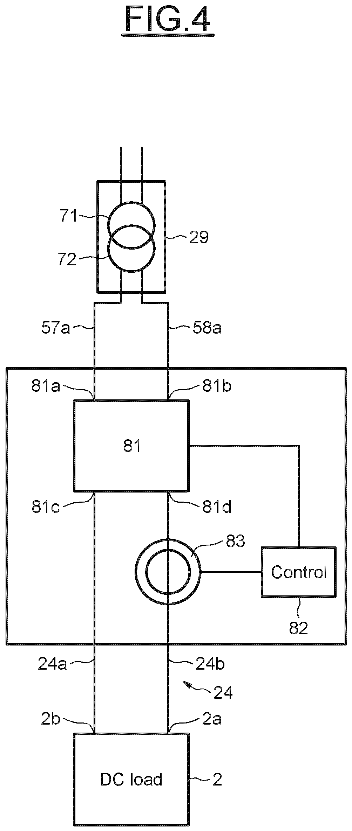

Figure 4 illustrates schematically a third embodiment of the controlled rectifier 34, 35, 36, 37, 38.

The branch transformer 29 comprises the primary winding 71 connected to the switch 49 and the secondary winding 72 connected to the input terminals 57a, 58a of the controlled rectifier 34.

The controlled rectifier 34 comprises a modular multilevel converter MMC 81, a control device 82 and a current sensor 83.

The MMC 81 comprises a first input terminal 81a connected to the input terminal 57a of the controlled rectifier 34, a second input terminal 81b connected to the input terminal 58a of the controlled rectifier 34, a first output terminal 81c connected to the first terminal 24a of the set of output terminals 24 connected to the first terminal 2a of the DC load 2 and a second output terminal 81d connected to the second terminal 24b of the set of output terminals 24 is connected to the second terminal 2b of the DC load 2.

The current sensor 83 delivers the value of a current flowing into the set of output terminals 24 to the control device 82.

The control device 82 controls the MMC 81 so that the value measured by the current sensor 83 is equal to a predetermined current value.

All the power branches 14, 15, 16, 17, 18 may be identical.

In variant, each power branch 14, 15, 16, 17, 18 may be connected to a different DC load 2, 3, 4, 5, 6 and therefore may have a different branch transformer 29, 30, 31, 32, 33, a different controlled rectifier 34, 35, 36, 37, 38 or a different number Y of secondary windings 55a, 56a, 55b, 56b, 55c, 56c, 55d, 56d, 55e, 56e.

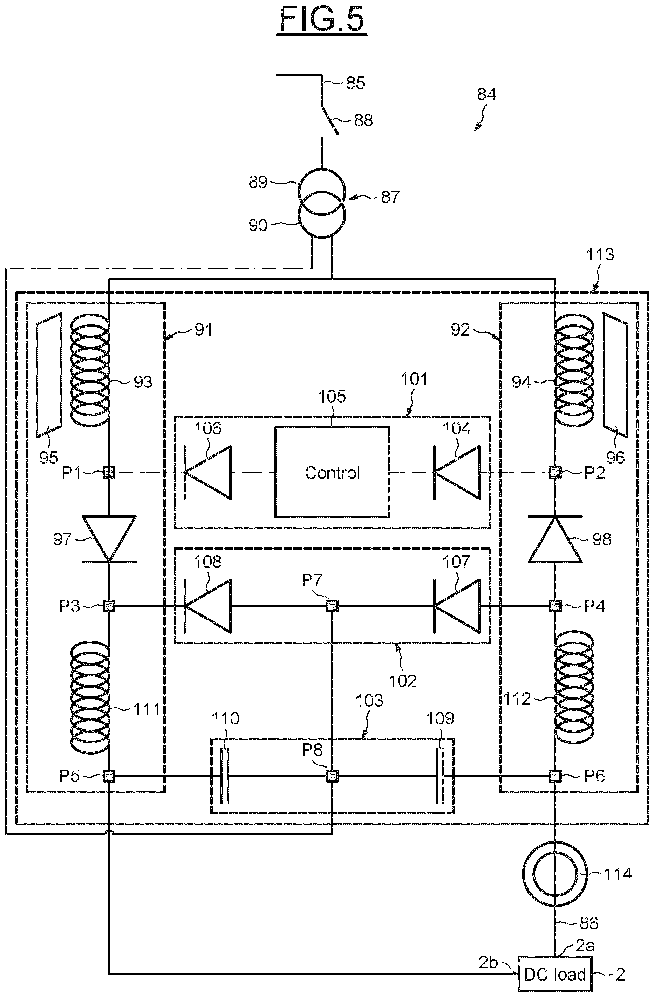

Figure 5 illustrates schematically an embodiment of the power branch.

The power branch 84 comprises input terminals 85 and a set of output terminals 86.

The input terminals 85 of the power branch 84 are connected to the output terminals 11 of the AC/AC power converter 9.

The set of output terminals 86 of the power branch 84 are connected to first terminals 2a of the first DC load 2.

The power branch 84 comprises a branch transformer 87 and a switch 88 connecting the input terminals 85 of the said power branch 84 and the branch transformer 87 of the said power branch 84.

The branch transformer 87 comprises a primary winding 89 connected to the switch 88 and a secondary winding 90 comprising a first end connected to a controlled rectifier comprising a full wave magnetic amplifier comprising a first leg 91 and a second leg 92.

The first leg 91 comprises a first inductor 93 wound onto a magnetic core 95, the first inductor 93 comprising a first end connected to the first end of the secondary winding 90 and a second end connected to a first connection point P1 of the first leg.

The first leg 91 further comprises a diode 97 comprising an anode connected to the first connection point P1, and a cathode connected to a second connection point P3 of the first leg 91.

The first leg 91 further comprises a second inductor 111 comprising a first end connected to the second connection point P3 and a second end connected to a third connection point P5 of the first leg 91.

The second leg 92 comprises a first inductor 94 wound onto a magnetic core 96, the first inductor 94 comprising a first end connected to the first end of the secondary winding 90 and a second end connected to a first connection point P2 of the second leg 92.

The second leg 92 further comprises a diode 98 comprising a cathode connected to the first connection point P2, and an anode connected to a second connection point P4 of the second leg 92.

The second leg 92 further comprises a second inductor 112 comprising a first end connected to the second connection point P4 and a second end connected to a third connection point P6 of the second leg.

The full wave magnetic amplifier further comprises a first power branch 101 connected to both the first connection point P1 of the first leg 91 and the first connection point P2 of the second leg 92.

The first power branch 101 comprises a first diode 104 comprising an anode connected to the first connection point P2 of the second leg 92, and a cathode connected to a control device 105. The first power branch 101 further comprises a second diode 106 comprising an anode connected to the control device 105 and a cathode connected to the first connection point P1 of the first leg 91.

The full wave magnetic amplifier further comprises a second power branch 102 connected to both the second connection point P3 of the first leg 91 and the second connection point P4 of the second leg 92.

The second power branch 102 comprises a first diode 107 comprising an anode connected to the second connection point P4 of the second leg 92, and a cathode connected to a middle connection point P7 of the second power branch 102.

The second power branch 102 further comprises a second diode 108 comprising an anode connected to the middle connection point P7 and a cathode connected to the second connection point P3 of the first leg 91.

The middle connection point P7 is connected to a second end of the secondary winding 90 of the branch transformer 87.

The full wave magnetic amplifier further comprises a third power branch 103 connected to both the third connection point P5 of the first leg 91 and the third connection point P6 of the second leg 92.

The third power branch 103 comprises a first capacitor 109 having a first end connected to the third connection point P6 of the second leg 92, and a second end connected to a middle connection point P8 of the third power branch 103. The middle connection point P8 is connected to the second end of the secondary winding 90 of the branch transformer 87. The third power branch 103 further comprises a second capacitor 110 having a first end connected to the middle connection point P8 and a second end connected to the third connection point P5 of the first leg 91.

The third connection point P5 of the first leg 91 is connected to the second terminal 2b of the DC load 2 and the third connection point P6 of the second leg 92 is connected to the first terminal 2a of the DC load 2.

The first leg 91, second leg 92, first power branch 101, second power branch 102 and third power branch 103 form a controlled rectifier 113.

The controlled rectifier 113 further comprises a current sensor 114 configured to deliver the value of a current flowing into the set of output terminals 86 to the control device 105. The current sensor 114 may also ensure that the value of the current delivered in the third connection point P5 of the first leg 91 and the value of the current delivered in the third connection point P6 of the second leg 92 are identical or nearly identical.

The control device 105 controls the magnetic saturation of the magnetic core 93, 94 so that the value measured by the current sensor 114 is equal to a predetermined current value.

In the following, examples of implementations of the power supply system 7 are disclosed.

It is assumed that the breaker B is closed so that the grid G supplies the main input terminals 8 and the switches 49, 50, 51, 52, 53, 88 are open.

The AC/AC power converter 9 is controlled by the control circuit 12 so that the output terminals 11 of the AC/AC power converter 9 deliver a three-phase power voltage from the power supplied by the grid G, the amplitude of the three-phase power voltage being equal to a predetermined value.

The AC/AC power converter 9 supplies the input terminals 19, 20, 21, 22, 23, 85 of the power branches 14, 15, 16, 17, 18, 84 connected in parallel to the output terminals 11 of the AC/AC power converter 9 with the power voltage.

For each power branch 14, 15, 16, 17, 18, 84, the branch transformer 29, 30, 31, 32, 33-, 87 supplies the input terminals 57a, 58a, 57b, 58b, 57c, 58c, 57d, 58d, 57e, 58e of the controlled rectifier 34, 35, 36, 37, 38 of the said power branch 14, 15, 16, 17, 18, 84 with an AC current from the power voltage.

The controlled rectifier 34, 35, 36, 37, 38, 113 of the said power branch 14, 15, 16, 17, 18, 84 delivers on its output terminals 24, 25, 26, 27, 28, 86 a DC current powering the input terminals 2a, 3a, 4a, 5a, 6a of the DC load 2, 3, 4, 5, 6.

The DC current delivered by the controlled rectifier 34, 35, 36, 37, 38, 113 is equal to a predetermined value of current so that the power powering the DC load 2, 3, 4, 5, 6 connected to the said controlled rectifier 34, 35, 36, 37, 38, 113 is variable.

Each DC load 2, 3, 4, 5, 6 is controlled regardless the other DC loads 2, 3, 4, 5, 6 connected to the power supply system 7. Further the power supply system 7 implements only one AC/AC power converter 9 contrary to a power system known from the prior art wherein each DC load 2, 3, 4, 5, 6 is connected to a dedicated AC/AC power converter.

The control circuit 12 may further control the AC/AC power converter 9 so that the frequency of the power current *I_{S}* is higher than the frequency of the grid current delivered by the grid G allowing to reduce the size of the branch transformers 29, 30, 31, 32, 33, 87.

The control circuit 12 may further control the AC/AC power converter 9 so that the frequency of the power voltage *I_{S}* is higher than the frequency of the grid current *I_{G}* delivered by the grid G allowing to reduce the size of the branch transformers 29, 30, 31, 32, 33, 87. In other words, the AC/AC power converter 9 may be configured to increase the frequency of the current.

For example, the frequency of the grid current *I_{G}* is equal to 50 Hz and the AC/AC power converter 9 is preconfigured so that the frequency of the power current *I_{S}* is equal to 100 Hz. As the frequency of the power current *I_{S}* is twice as the frequency of the grid current *I_{G}*, the volume of the branch transformers 29, 30, 31, 32, 33, 87 is for example divided by about two reducing the cost and the size of the branch transformers 29, 30, 31, 32, 33, 87.

The switch 49, 50, 51, 52, 53, 88 of the power branch 14, 15, 16, 17, 18, 84 may be closed to shunt the said power branch so that the branch transformer 29, 30, 31, 32, 33, 87 of the said power branch is not supplied with the power current or so that the controlled rectifier 34, 35, 36, 37, 38, 113 of the said power branch is not supplied with a current.

The power branch 14, 15, 16, 17, 18, 84 is shunted for example when a fault is detected in the said branch, for example a fault of the branch transformer 29, 30, 31, 32, 33, 87 or the controlled rectifier 34, 35, 36, 37, 38, 113 or the DC load 2, 3, 4, 5, 6 or an insulation fault of the said power branch, when maintenance operations are carried out or when a DC load 2, 3, 4, 5, 6 needs to be changed. This allows to continue powering the other power branches 14, 15, 16, 17, 18, 84 and not having to turn off the whole facility 1. In such configuration, each DC load 2, 3, 4, 5, 6 may be isolated such that if one DC load 2, 3, 4, 5, 6 experiences a fault or a surge, it will not affect the rest of the DC loads 2, 3, 4, 5, 6, thus enhancing overall reliability of the power supply system 7. This also reduces the risk of cascading failures. In case of a malfunction in one power branch 14, 15, 16, 17, 18, 84, the others power branches 14, 15, 16, 17, 18, 84 remain unaffected as the failed power branch 14, 15, 16, 17, 18, 84 may be isolated.

The switch 49, 50, 51, 52, 53, 88 makes it easier to perform maintenance on some DC load 2, 3, 4, 5, 6 and/or on its power branch 14, 15, 16, 17, 18, 84 while the rest of the DC loads 2, 3, 4, 5, 6 are kept supplied by their own power branch 14, 15, 16, 17, 18, 84.

The power supply system 7 gives scalability to the facility 1 as new DC loads can be added with their own dedicated power branches without significant changes to the existing facility 1.

## Claims

1. A power supply system (7) for a plurality of DC loads (2, 3, 4, 5, 6), **characterized in that** the power supply system (7) comprises:
- main input terminals (8) configured to be connected to a grid (G);
- an AC/AC power converter (9) comprising input terminals (10) connected to the main input terminals (8) and output terminals (11); and
- a plurality of power branches (14, 15, 16, 17, 18), each power branch (14, 15, 16, 17, 18) comprising:
• input terminals (19, 20, 21, 22, 23, 85) connected to the output terminals (11) of the AC/AC power converter (9);
• at least one set of output terminals (24, 25, 26, 27, 28, 86) configured to be connected to a DC load (2, 3, 4, 5, 6) of the plurality of DC loads (2, 3, 4, 5, 6);
• a branch transformer (29, 30, 31, 32, 33, 87) connected to the input terminals (19, 20, 21, 22, 23, 85) of the said power branch (14, 15, 16, 17, 18); and
• a controlled rectifier (34, 35, 36, 37, 38, 113) connected to the branch transformer, the controlled rectifier (34, 35, 36, 37, 38, 113) comprising output terminals (44, 45, 46, 47, 48) connected to the output terminals (24, 25, 26, 27, 28, 86) of the said power branch (14, 15, 16, 17, 18) to power the output terminals (24, 25, 26, 27, 28, 86) of the said power branch (14, 15, 16, 17, 18) with a DC current.

2. The power supply system (7) according to claim 1, wherein the number of power branches (14, 15, 16, 17, 18) is equal to the number of DC loads (2, 3, 4, 5, 6), the set of output terminals (24, 25, 26, 27, 28, 86) of each power branch (14, 15, 16, 17, 18) being intended to be connected to a DC load (2, 3, 4, 5, 6).

3. The power supply system (7) according to claim 1 or 2, wherein the AC/AC power converter is configured to increase the frequency of a current delivered by the grid so that the frequency of the current delivered by the AC/AC power converter (9) is higher than the frequency delivered by the grid (G).

4. Power supply system (7) according to any one of claims 1 to 3, further comprising a main transformer (13) comprising a primary circuit connected to the AC main input terminals (8) and a secondary circuit connected to the input terminals (10) of the AC/AC power converter.

5. The power supply system (7) according to any one of claims 1 to 4, wherein each power branch (14, 15, 16, 17, 18) further comprises a switch (49, 50, 51, 52, 53, 88) between the input terminals (19, 20, 21, 22, 23, 85) of the said power branch (14, 15, 16, 17, 18) and the branch transformer (29, 30, 31, 32, 33, 87).

6. The power supply system (7) according to any one of claims 1 to 5, wherein the branch transformer (29, 30, 31, 32, 33) comprises a primary winding (54a, 54b, 54c, 54d, 54e) and two secondary windings (55a, 56a, 55b, 56b, 55c, 56c, 55d, 56d, 55e, 56e), the primary winding (54a, 54b, 54c, 54d, 54e) being connected to the input terminals (19, 20, 21, 22, 23) of the said power branch (14, 15, 16, 17, 18) and the two secondary windings (55a, 56a, 55b, 56b, 55c, 56c, 55d, 56d, 55e, 56e) being connected to the controlled rectifier (34, 35, 36, 37, 38), a first end of the two secondary windings (55a, 56a, 55b, 56b, 55c, 56c, 55d, 56d, 55e, 56e) being connected together to form a common connection configured to be connected to the DC load (2, 3, 4, 5, 6) and the controlled rectifier (34, 35, 36, 37, 38) comprises a full wave magnetic amplifier comprising a first leg (59) connected to a second end of a first secondary winding (55a, 55b, 55c, 55d, 55e) of the two secondary windings (55a, 56a, 55b, 56b, 55c, 56c, 55d, 56d, 55e, 56e) and a second leg (60) connected to a second end of a second secondary winding (56a, 56b, 56c, 56d, 56e) of the two secondary windings (55a, 56a, 55b, 56b, 55c, 56c, 55d, 56d, 55e, 56e).

7. The power supply system (7) according to claim 6, wherein the full wave magnetic amplifier further comprises a control device (69) and each leg (59, 60) comprises an inductor (61, 62) wound onto a magnetic core (63, 64), a first diode (65, 66) and a second diode (67, 68), a first end of the inductor (61, 62) of each leg (59, 60) being connected respectively to a first and second input terminals (57a, 57b, 57c, 57d, 57e, 58a, 58b, 58c, 58d, 58e) of the controlled rectifier (34, 35, 36, 37, 38), a second end of the inductor (61, 62) of each leg (59, 60) being connected to the anode of the first diode (65, 66) and to the cathode of the second diode (67, 68) of the said leg, the anode of the second diodes (67, 68) being connected to the control device (69), the controlled rectifier (34, 35, 36, 37, 38) further comprising a diode (D), a current sensor (70) and an inductor (L), the anode of the diode (D) and a first end of the inductor (L) being connected to the cathode of the first diode (65, 66) of each leg (59, 60), a second end of the inductor (L) being connected to the output terminals (44, 45, 46, 47, 48) of the controlled rectifier (34, 35, 36, 37, 38), the current sensor (70) being intended to deliver the value of a current flowing into the set of output terminals (24, 25, 26, 27, 28) to the control device (69) to control the magnetic saturation of the magnetic core (63, 64) so that the value measured by the current sensor (70) is equal to a predetermined current value.

8. The power supply system (7) according to any one of claims 1 to 5, wherein the branch transformer (87) comprises a primary winding (89) and a secondary winding (90), the primary winding (89) being connected to the input terminals (85) of the said power branch and the secondary winding (90) being connected to the controlled rectifier (113), the controlled rectifier (113) comprising a full wave magnetic amplifier comprising a first leg (91) and a second leg (92), each leg (91, 92) comprising:
- a first inductor (93, 94) wound onto a magnetic core (95, 96), the first inductor (93, 94) comprising a first end connected to a first end of the secondary winding (90) and a second end connected to a first connection point (P1, P2);
- a diode (97, 98), wherein the anode of the diode (97) of the first leg (91) is connected to a first connection point (P1) of the first leg (91) and the cathode of the diode (97) of the first leg (91) is connected to a second connection point (P3) of the first leg (91), and the cathode of the diode (98) of the second leg (92) is connected to a first connection point (P2) of the second leg (92) and the anode of the diode (98) of the second leg (92) is connected to a second connection point (P4) of the second leg (92); and
- a second inductor (111, 112) comprising a first end connected to the second connection point (P3, P4) and a second end connected to a third connection point (P5, P6),
the full wave magnetic amplifier further comprising:
- a first power branch (101) connected to both the first connection point (P1) of the first leg (91) and the first connection point (P2) of the second leg (92), the first power branch (101) comprising a first diode (104) comprising an anode connected to the first connection point (P2) of the second leg (92), and a cathode connected to a control device (105) configured to control the magnetic saturation of the magnetic core (93, 94), the first power branch (101) further comprising a second diode (106) comprising an anode connected to the control device (105) and a cathode connected to the first connection point (P1) of the first leg (91);
- a second power branch (102) connected to both the second connection point (P3) of the first leg (91) and the second connection point (P4) of the second leg (92), the second power branch (102) comprising a first diode (107) comprising an anode connected to the second connection point (P4) of the second leg (92) and a cathode connected to a middle connection point (P7) of the second power branch (102), the middle connection point (P7)of the second power branch (102) being connected to a second end of the secondary winding (90) of the branch transformer (87), the second power branch (102) further comprising a second diode (108) comprising an anode connected to the middle connection point (P7) and a cathode connected to the second connection point (P3) of the first leg (91); and
- a third power branch (103) connected to both the third connection point (P5) of the first leg (91) and the third connection point (P6) of the second leg (92), the third power branch (103) comprising a first capacitor (109) comprising a first end connected to the third connection point (P6) of the second leg (92) and a second end connected to a middle connection point (P8) of the third power branch (103), the middle connection point (P8) of the third power branch (103) being connected to the second end of the secondary winding (90) of the branch transformer (87), the third power branch (103) further comprising a second capacitor (110) having a first end connected to the middle connection point (P8) and a second end connected to the third connection point (P5) of the first leg (91),
wherein the controlled rectifier (113) further comprises a current sensor (114) intended to deliver the value of a current flowing into the set of output terminals (86) to the control device (105) to control the magnetic saturation of the magnetic core (93, 94) so that the value measured by the current sensor (114) is equal to a predetermined current value.

9. The power supply system (7) according to any one of claims 1 to 5, wherein the branch transformer (29, 30, 31, 32, 33) comprises a primary winding (71) and at least one secondary winding (72), the primary winding (71) being connected to the input terminals (19, 20, 21, 22, 23) of the said power branch (14, 15, 16, 17, 18) and the at least one secondary winding (72) being connected to the controlled rectifier (34, 35, 36, 37, 38, 113), the controlled rectifier (34, 35, 36, 37, 38, 113) comprising at least two phase legs (73, 74), each phase leg (73, 74) being connected to an end of the at least one secondary winding (72), each phase leg comprising at least two thyristors (76, 77, 78, 79) in series.

10. The power supply system (7) according to any one of claims 1 to 5, wherein the branch transformer (29, 30, 31, 32, 33) comprises a primary winding (71) and at least one secondary winding (72), the primary winding (71) being connected to the input terminals (19, 20, 21, 22, 23) of the said power branch (14, 15, 16, 17, 18) and the at least one secondary winding (72) being connected to the controlled rectifier (34, 35, 36, 37, 38, 113), the controlled rectifier (34, 35, 36, 37, 38, 113) comprises a modular multilevel converter (81) configured to deliver a DC current.

11. The power supply system (7) according to any one of claims 1 to 10, wherein each DC load (2, 3, 4, 5, 6) is any one of a plasma torch, an electrolyser, an electric arc furnace, an electric transportation or a fractionation tower.

12. The power supply system (7) according to any one of claims 1 to 11, wherein all the power branches (14, 15, 16, 17, 18) are identical.

13. A facility (1) comprising a plurality of DC loads (2, 3, 4, 5, 6) and the power supply system (7) according to any one of claims 1 to 12, each DC load (2, 3, 4, 5, 6) being connected to a set of output terminals (24, 25, 26, 27, 28, 86) of a power branch (14, 15, 16, 17, 18).

14. A method for powering a plurality of DC loads (2, 3, 4, 5, 6), **characterized in that** the method comprises:
- controlling an AC/AC power converter (9) comprising input terminals (10) connected to main input terminals (8) coupled to a grid (G), and output terminals (11) so that the amplitude of at least one power voltage delivered in the output terminals by the AC/AC power converter from power supplied by the grid (G) is equal to a predetermined value;
- powering input terminals (19, 20, 21, 22, 23, 85) of a plurality of power branches (14, 15, 16, 17, 18) connected in parallel to the output terminals of the AC/AC power converter with the power voltage;
- each power branch (14, 15, 16, 17, 18) comprising at least one set of output terminals (24, 25, 26, 27, 28, 86) connected to a DC load (2, 3, 4, 5, 6) of the plurality of DC loads, a branch transformer (29, 30, 31, 32, 33, 87) connected to the input terminals (19, 20, 21, 22, 23) of the said power branch (14, 15, 16, 17, 18) and a controlled rectifier (34, 35, 36, 37, 38, 113) connected to the branch transformer, the controlled rectifier (34, 35, 36, 37, 38, 113) comprising output terminals (44, 45, 46, 47, 48) connected to the output terminals (24, 25, 26, 27, 28, 86) of the said power branch (14, 15, 16, 17, 18), the method comprising controlling the controlled rectifier (34, 35, 36, 37, 38, 113) to power the set of output terminals (24, 25, 26, 27, 28, 86) of the said power branch (14, 15, 16, 17, 18) with a DC current to power the said DC load (2, 3, 4, 5, 6).
